# EUROPEAN PATENT SPECIFICATION

(11) **EP 1 392 420 B1**
(45) Date of publication and mention of the grant of the patent: **20.12.2006**
(21) Application number: 02736272.2
(22) Date of filing: 14.05.2002
(51) Int. Cl.: B01F 15/04, B01F 3/12, B01F 15/02, B01F 15/00, B01F 5/10, A23P 1/08, B65G 53/46

(54) **DEVICES FOR PREPARING A FLOWABLE BATTER AND DOSAGE UNIT**
VORRICHTUNGEN ZUR HERSTELLUNG EINES FLIESSBAREN TEIGES UND DOSIERUNGSEINHEIT
DISPOSITIFS DE PREPARATION D'UNE PATE FLUIDIFIABLE ET UNITE DE DOSAGE

(30) Priority: 18.05.2001 NL 1018100
(43) Date of publication of application: 03.03.2004
(73) Proprietor: STORK TITAN B.V., 5831 AV Boxmeer (NL)
(72) Inventor: EERDEN, Hendricus, Franciscus, Jacobus, NL-5421 PS Gemert (NL); VAN DER STEEN, Franciscus, Theodorus, Henricus, 5366 CA Meegen (NL)
(74) Representative: Volmer, Johannes Cornelis
(86) International application number: PCT/NL2002/000310
(87) International publication number: WO 2002/094424

(56) References cited:
- EP-A- 1 151 788
- WO-A-01/14244
- DE-A- 2 805 942
- FR-A- 1 367 395
- NL-A- 7 006 242
- US-A- 3 672 646
- US-A- 5 103 908
- US-A- 5 158 782
- US-A- 5 921 679

## Description

According to a first aspect, the present invention relates to a device for preparing flowable batter, in particular batter intended for use as coating material in the food industry, in batches, comprising a mixing vessel, which is provided with a mixing device for mixing starting materials of the batter and with an outlet for finished batter, a liquid-dosage unit, which is connected to the mixing vessel, for feeding liquid starting material to the mixing vessel, and a dosage unit, which is connected to the mixing vessel, for feeding particulate material to the mixing vessel.

A device of this type for preparing flowable batter in batches is known. This batter, as it is known in the art, contains proteins. Protein batter of this type is used, inter alia, as sticky coating material for coating pieces of food, such as meat products, including snacks, which are then covered with particulate coating material, for example breadcrumbs or flakes. The protein batter is used to make the particulate coating material stick to the food product. Other possible functions of the batter include the addition of organoleptic characteristics, such as taste, or an improvement in these characteristics, and an improvement in the appearance of the product coated with such batter.

A device for the dosage of flour in a noodle making machine is known from document US-A-5 158 782.

In a mixing device for the preparation of what is known as tempura batter, which is a batter with specific properties, which is known from US-A-4 198 167, a measured quantity of water and a measured quantity of finely distributed dry mix of other starting materials are simultaneously fed to a mixing vessel. A special mixing element which is suspended in the mixing vessel is used for mixing.

During the preparation of batter in batches, batches which are prepared in succession, each of a size of some tens of kilograms, have to have a substantially constant composition with associated constant quality and physical properties. Constant physical properties, such as the viscosity of the flowable batter, are important for subsequent use which exploits these properties of the batter, in particular the flow properties. To monitor and control this composition, accurate dosage of both the liquid component of the batter, generally water, to which, if desired, additives may be added, and the solid, particulate component, generally flour, is desired. However, the formation of bridges in the particulate starting material and of lumps may affect the accuracy of dosage. During this dosage, the pouring properties, such as the particle dimensions of the solid starting material, also play a role, and these particle dimensions may differ for different types of batter.

Therefore, it is an object of the present invention to provide a device for preparing flowable batter in batches, in which the solid particulate component can be dosed with a high level of accuracy.

Yet another object of the invention is to provide a device of this type which allows a high level of dosage accuracy to be achieved for a wide range of dimensions of the particulate starting material.

Yet another object of the invention is to provide a device of this type which allows preparation of batter having the desired flow properties.

According to the invention the device of the type described above, comprises a dosage unit as defined in claim 16.

The dosage unit which is used in the device according to the invention is of the volumetric type. The dosage unit comprises a storage vessel for the particulate starting material of the batter, having a bottom in which there is a bottom outlet opening. The dosage element, which is arranged rotatably on the bottom, is provided with dosage segments. These dosage segments form compartments into which the particulate starting material is introduced via the open top side, which functions as a filling opening of a dosage segment. The bottom of the storage vessel also forms the bottom of the dosage segments, except when a dosage segment is positioned above the bottom outlet opening. In that position, the open underside of a dosage segment acts as a pouring opening, so that the particulate material drops into the pouring opening. To prevent particulate starting material from flowing directly out of the storage vessel into the bottom outlet opening, there is a cover plate which is arranged a fixed distance above the bottom outlet opening, leaving a gap clear. The height of the gap corresponds to the thickness of the rotatably positioned dosage element. Therefore, this stationary cover plate, by interacting with the dosage element, closes off the bottom outlet opening. Only when a filled dosage segment is positioned between the cover plate of the cover ring and the bottom outlet opening does the particulate starting material drop out of the dosage segment through the bottom outlet opening into the mixing vessel arranged beneath it belonging to the device according to the invention. Each open dosage segment of the dosage element has a given volume. The thickness of the dosage element, which according to a preferred embodiment is a dosage disc, is advantageously small compared to its diameter, so that the volume of a dosage segment is defined substantially by its surface area. This ratio of surface area to volume makes it possible to prevent the formation of bridges. When there is a standard stock of particulate starting material in the storage vessel and when the device is operating normally, a dosage segment of this type will be filled with the same volume of particulate starting material each time and will therefore contain the same quantity by weight of particulate material each time. On account of the relatively small volume of a dosage segment of this type compared to the total quantity of particulate material which is required to prepare flowable batter, this starting material can be dosed accurately, divided into portions. Any standard drive means, such as an electric motor, can be used as the drive for rotating the dosage element.

For accurate preparation of batter, it has been found that dosage of a relatively large number of relatively small volumes/quantities saves time compared to preparation in which the particulate material is added in one go as a large mass.

The rotatable dosage element is advantageously attached to a driven rotation shaft, which is arranged vertically in the storage vessel and passes through a central shaft opening in the bottom of the storage vessel. This makes the top side of the storage vessel readily accessible, for example via a hinged lid, in order for the storage vessel to be filled with particulate material, and also for maintenance and cleaning work if required.

To ensure uniform filling of the dosage segments with a constant volume of particulate material, it is preferable for a stirring device to be provided in the storage vessel.

According to a preferred embodiment, this stirring device comprises a stirring shaft and stirring arms which are directed substantially perpendicular to the stirring shaft and are radially orientated. The stirring arms advantageously all lie in one plane and are vertically offset with respect to one another.

To enable the device according to the invention to be used for a wide range of particle dimensions of the particulate material without having to carry out all kinds of adjustments, the stirring device preferably comprises an introduction element which is connected to the lower stirring arm and is in the form of a helix downwardly directed in a direction which is opposite to the direction of rotation of the rotation shaft of the dosage element. Therefore, during the rotation, the particulate material is gradually pushed into the dosage segments of the dosage element. This helical element is advantageously a strip of material which covers the length of half a helix turn and which, during use, rotates over approximately half the radius of the storage vessel. The width of the strip of material is such that it cannot come into contact with stationary components of the device, such as the wall of the storage vessel, so that the particulate material is not pulverized to smaller dimensions.

The stirring device arranged above the cover plate is advantageously driven by the same drive as the dosage element, for example as a result of the stirring shaft being secured to the top end of the rotation shaft of the electric motor which drives the dosage element. It is also possible to use nested concentric shafts to rotate the dosage element and the stirring device.

For accurate control, the device according to the invention is advantageously provided with means for detecting and counting the dosage segments. Means of this type, for example in the form of a sensor which, as seen in the direction of rotation of the dosage element, is arranged in front of the bottom outlet opening, make it possible to dose a correct number of volumes of the dosage segments via an automatic control unit. Another possibility is to count the number of pulses given to the drive, one pulse causing the dosage element to rotate through a distance corresponding to one dosage segment.

The dosage element advantageously comprises dosage segments which are distributed over its entire circumference and each have the same volume. The thickness of the dosage element is advantageously small compared to its diameter, and therefore the height of the dosage segment is small compared to the surface area of the open top side and the open underside. The shortest distance between opposite walls or wall segments of a dosage segment is advantageously at least 5 cm. These measures promote the accuracy of dosage.

The shape and dimensions of the bottom outlet opening, the dosage segments and the cover plate are adapted to one another, i.e. the bottom outlet opening is slightly larger than a dosage segment, since otherwise there is a risk that not all the particulate starting material will be released from a dosage segment. The cover plate serves to cover a dosage segment which is located above the bottom outlet opening. If the cover plate only covers the bottom outlet opening, the dosage segments can be filled uniformly over virtually one complete rotation.

The device advantageously comprises a control device for controlling the flow rate of the starting materials for the batter, in particular the flow rate of the dosage unit for particulate material, on the basis of one or more measured properties of the batter, and a system for determining one or more properties of the batter. A suitable system is a measurement system for determining the viscosity. A system of this type may comprise a circulation loop which is connected to the mixing vessel and in which a pump and a pressure gauge are incorporated. The control device controls, for example, the drive of the dosage disc and/or the feed means for liquid starting material, and is coupled to the means for detecting and counting the dosage segments. In this way, it is possible in each case to prepare successive batches of batter which have substantially constant flow properties. If a deviation from the desired and/or set property, in particular the viscosity, is detected, depending on the deviation it is possible to add more liquid starting material or more particulate material in small portions as required until the desired value is reached. Another possibility is to add gas in order to adjust the viscosity. Since the viscosity is dependent on, inter alia, the temperature, the viscosity control may also comprise a temperature control with suitable heating means and/or cooling means. In a preferred embodiment, the viscosity measurement of the batter forms part of a control circuit, in such a manner that the desired viscosity of the finished batter is achieved by controlling the flow rate of the feed of particulate starting material for the batter.

Properties of the batter which can be used to control the preparation generally include viscosity, colour, refractive index, yield stress, pressure, temperature, concentration, relative density, etc. It is advantageous to measure two or more properties, since two properties define the optimum product.

The device discussed above is suitable for preparing batter in batches in a mixing vessel. If desired, it is possible to provide a plurality of dosage units for different types or qualities of particulate starting material.

According to a second aspect, the invention relates to a device for the in-line preparation of a flowable batter, in particular batter intended for use as coating material in the food industry, comprising a conveyor line having an inlet end for supplying liquid starting material of the batter and an outlet end for discharging finished batter, the line between the inlet end and the outlet end being connected to at least one dosage unit for feeding particulate material to the line, the dosage unit being as defined in claim 16.

In this in-line device, which is intended in particular for applications in which the preliminary processing operations carried out on the batter are linked in preparation for a subsequent process, for example the actual application of the batter to food products, the liquid component of the batter is supplied continuously via the inlet end of the conveyor line, for example using a pump. This conveyor line also functions as a container in which the mixing of the liquid component and the dosed particulate starting material takes place. For this purpose, the outlet opening of a dosage unit, which dosage unit has been described above and extensively explained for the device which operates in batches, is connected to the conveyor line. For this purpose, a connecting passage, which is provided with a suitable pump means for feeding particulate starting material to the conveyor line, which is under a certain pressure, is advantageously arranged between this outlet opening and an introduction opening in the conveyor line. It is preferable for more than one dosage unit to be arranged in succession in the downstream direction, as will be explained in more detail below. Mixing devices, such as static mixers, are advantageously incorporated in the conveyor line downstream of each dosage unit, in order to enable the dosed particulate material to be mixed with the liquid component or the batter which has already been partially prepared.

For continuous preparation of batter of a constant quality, there is advantageously a control device for controlling the flow rate of a dosage unit for particulate material on the basis of one or more measured properties of the batter, such as the viscosity, and a system for determining one or more properties of the batter. The system for determining one or more properties of the batter is advantageously incorporated in a circulation loop which is connected to the conveyor line. The control may be effected in the manner which has already been explained above.

This in-line device allows the preparation of protein batter to be matched to the quantity of batter which is required for the product which is to be coated in a protein-coating machine. Information gained through experience can be used to make a batter, and change it if necessary, even after temporary storage.

The preferred embodiments of the dosage unit which are described above and explained for the device which operates in batches also apply to this in-line device.

The dosage unit which can be used in the device according to the invention can also be used for other applications, in which case it is important for a large quantity of particulate material to be dosed accurately in small quantities. This dosage unit is defined in claims 16 and 17.

The invention is explained in more detail below with reference to the appended drawings, in which:
Fig. 1 diagrammatically depicts an embodiment of a device according to the invention which operates in batches;
Fig. 2 is a partial cross section through an embodiment of a dosage unit which is used in the device according to the invention;
Fig. 3 shows a plan view of the bottom of the storage vessel of the dosage unit;
Fig. 4 shows a plan view of a dosage disc of the dosage unit;
Fig. 5 shows a plan view of a cover plate of the dosage unit;
Fig. 6 shows a perspective view of an embodiment of a stirring device of the dosage unit; and
Fig. 7 shows a diagrammatic view of an embodiment of an in-line device according to the invention.

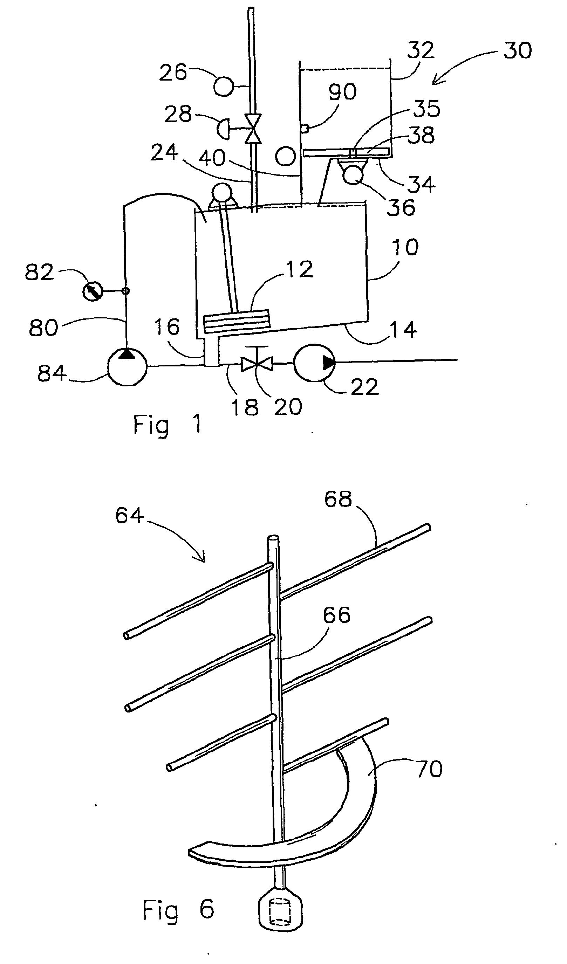

Fig. 1 diagrammatically depicts an embodiment of a device for preparing flowable protein batter in batches. The device comprises a mixing vessel 10, in which a mixing device 12 for mixing the starting materials of the protein batter is arranged. The mixing vessel 10 has a sloping base 14, which is provided with an outlet 16 at its lowest point. The outlet 16 is in communication with a discharge line 18 which leads to a storage vessel of a protein-coating machine (not shown), where the flowable batter is applied to food products which are to be coated. A valve 20 and a pump 22 are incorporated in the discharge line 18.

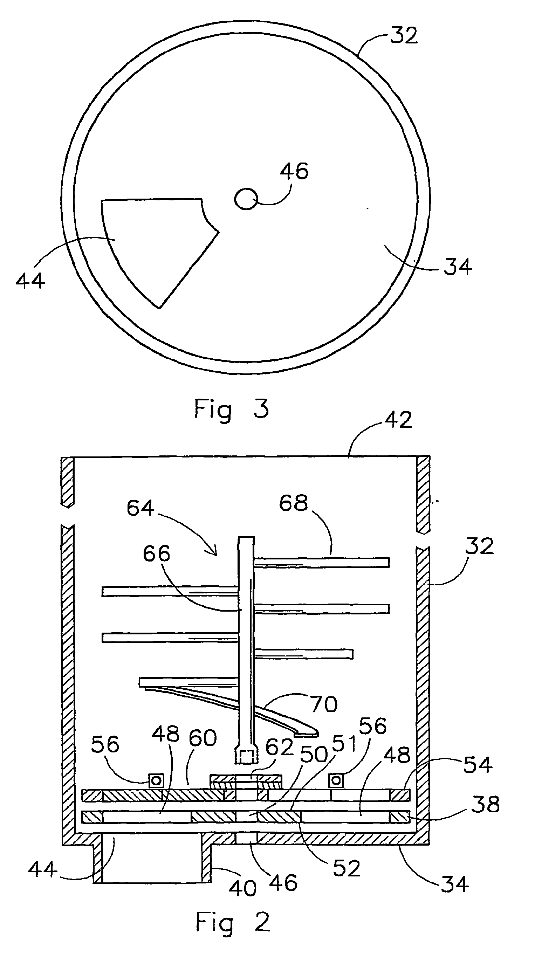

The flowable component of the starting material for preparing protein coating is fed to the mixing vessel 10 in dosed fashion via a feed line 24 in which a flowmeter 26 and a control valve 28 are incorporated. A dosing unit for supplying particulate starting material for the coating is denoted overall by reference numeral 30. This dosage unit comprises a storage vessel 32 having a horizontal bottom 34, beneath which an electric motor 36 is arranged. This electric motor 36 drives a dosage element in the form of a dosage disc 38, which is only diagrammatically indicated in Fig. 1. Outlet 40 from the storage vessel 32 connects the storage vessel 32 to the mixing vessel 10. The dosage unit 30 is illustrated in more detail in Fig. 2.

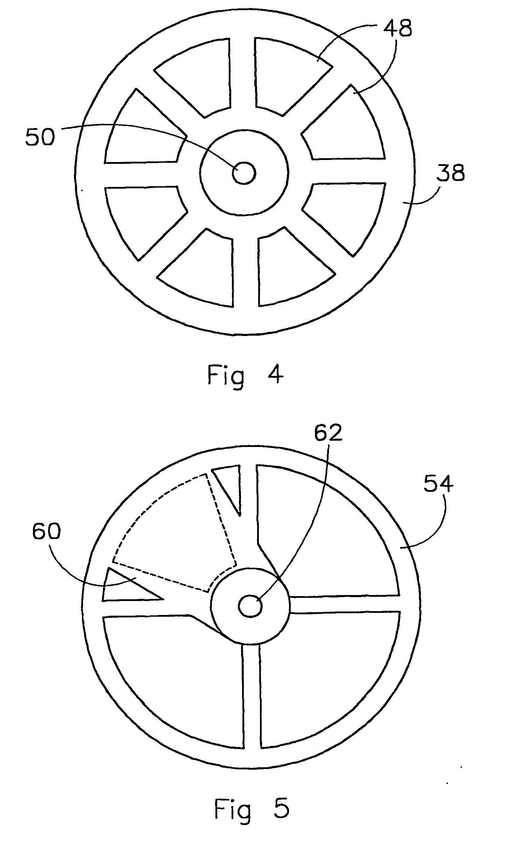

The cylindrical storage vessel 32 has an open top side 42, through which the storage vessel can be filled with particulate material. This top side 42 will usually be closed off with the aid of a lid which is not shown and is, for example, hinged. The flat bottom 34 is provided with a bottom outlet opening 44, which is located in the vicinity of the outer circumference and is shaped, for example, as shown in Fig. 3. In the centre of the bottom 34 there is a shaft opening 46, through which the shaft 35 (Fig. 1) of the electric motor 36 extends. The dosage disc 38 is arranged rotatably directly above the bottom 34, in such a manner that it can slide over it. The thickness of the dosage disc is exaggerated in this figure. The dosage disc 38 comprises a number of dosage segments 48 which are only open on the top side 51 and the underside 52 of the dosage element 38, are all of the same shape and are distributed regularly over the dosage disc 38, cf. Fig. 4. The dosage disc 38 comprises a central shaft opening 50 for the shaft 35 of the electric motor 36, to which this dosage disc 38 is fixedly connected so that it can rotate. The shape of an dosage segment 48 largely corresponds to the shape of the bottom outlet opening 44, although it has slightly smaller dimensions. These dosage segments 48 are open on the top side 51 and underside 52 of the dosage disc 38, so that the particulate material can easily flow into a dosage segment 48 and can be released therefrom above the bottom outlet opening 44. A cover ring 54 is fixed to the wall 58 of the storage vessel 32 with the aid of connecting means 56. The cover ring 54 is provided with a separate cover plate 60 at the location of the bottom outlet opening 44, so that particulate material is prevented from passing directly out of the storage vessel 32 into the bottom outlet opening 44. In the embodiment shown in Fig. 5, the cover ring 54 and the cover plate 60 are formed from a single piece. The cover ring 54 has a central shaft opening 62, through which the shaft 35 of the electric motor 34 projects. A stirring device 64 is secured to this shaft. The stirring device 64 comprises a stirring shaft 66, which in the case which is illustrated has stirring arms 68 which lie in one plane on either side of the stirring shaft 66, vertically offset with respect to one another. The bottom pair of stirring arms 68 has a shorter length than the stirring arms located above them. An introduction element 70 is secured to the bottom stirring arm. This introduction element 70 comprises a helical strip of material, which in the embodiment illustrated has the length of half a turn. The direction of rotation of the rotation shaft is indicated by an arrow, so that particulate material is pushed uniformly into a dosage segment 48 of the dosage disc 38 by the introduction element 70. As a result, a dosage segment 48 is always filled with the same volume of particulate material.

As can be seen from Fig. 1, the outlet 16 of the mixing vessel 10 is also connected to a circulation line 80. This circulation line 80 is used to enable the viscosity of the batter in the mixing vessel 10 to be measured continuously or intermittently. A viscosity measurement of this type can be carried out in the customary way, for example by means of pressure measurement with the aid of a pressure gauge 82. Furthermore, the circulation loop 80 is provided with a suitable pump means 84, such as a rotary piston pump.

A sensor 90 is provided on the inner side of a vertical wall of the storage vessel 32 and can detect and count the number of dosage segments 44. To enable the filling level to be monitored, it is possible to provide level-measuring devices, which are not shown in Fig. 2.

The device operates in the following way. The storage vessel 32 is filled with particulate protein material. The mixing vessel 10 is filled with a quantity of water which is determined according to the recipe for the batter, for example of the order of magnitude of 100 litres. If desired, standard additives may be or have been added to this water. The additives may also be introduced directly into the mixing vessel 10. Then, the flour is dosed, for example in an amount of approximately 50 kg. Since the volume of a dosage segment 48 of the dosage disc 38 and the pouring properties of the particulate protein material are known, a dosage segment 48 of this type contains a defined volume and therefore a defined quantity of protein material, for example of the order of magnitude of a few tens of grams. The quantity of protein material which is determined according to the recipe of the batter is introduced into the mixing vessel 10 by the dosage unit 30, the sensor 90 counting the number of dosage segments 48 and transmitting this number to a central control unit. The dosing is stopped when the predetermined number of dosage segments 48 has passed. After the particulate protein material has been mixed with the water in the mixing vessel 10, the viscosity thereof is measured. If the viscosity deviates from the desired viscosity, additional water and/or additional protein material can be added as needed. If the viscosity satisfies the criteria with regard to the viscosity, this batter can be pumped to a storage vessel of the protein-coating machine by the pump 22 as a result of the valve 20 being opened.

Tests have demonstrated that with the aid of the device according to the invention, the viscosity can automatically be set within the range from 100-400 centipoise, and deviations of less than 2% can be achieved. This accuracy can be achieved for a wide range of dimensions of particulate protein materials.

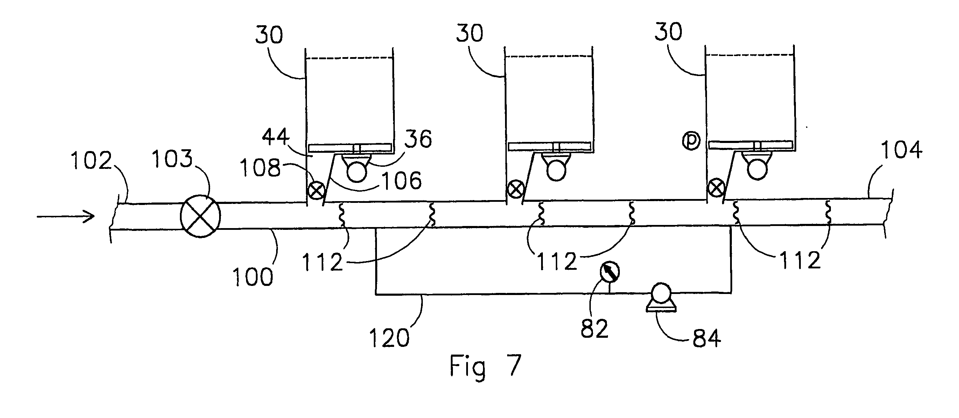

Fig. 7 shows an embodiment of a device for the in-line preparation of a flowable batter in accordance with the second aspect of the invention. In this figure, components which are identical to components which have been referred to above are denoted by the same reference numerals. The device comprises a conveyor pipe 100, in which liquid starting material for batter is supplied continuously via inlet end 102 and pump 103. Finished batter is discharged via outlet end 104, for example directly to a protein-coating machine (not shown). In the embodiment which is illustrated, three dosage units 30 are arranged in succession, each provided with its own electric motor 36. A connecting passage 106, in which there is a pump 108, for example a Rootes pump, connects the bottom outlet opening 44 to the conveyor tube 100. Static mixers 112 are present in the conveyor tube 100. The viscosity can be determined in a circulation loop 120 incorporating pump 84 and pressure gauge 82. The device is provided with a control device which controls the dosage units 30 on the basis of the measured and desired viscosity.

## Claims

1. Device for preparing flowable batter, in particular batter intended for use as coating material in the food industry, in batches, comprising a mixing vessel (10), which is provided with a mixing device (12) for mixing starting materials of the batter and with an outlet (16) for finished batter, a liquid-dosage unit (26, 28), which is connected to the mixing vessel (10), for feeding liquid starting material to the mixing vessel (10), and a dosage unit (30), which is connected to the mixing vessel (10), for feeding particulate material to the mixing vessel (10), in which device the dosage unit comprises a storage vessel (32) for particulate material, the bottom (34) of which vessel is provided with a bottom outlet opening (44), a dosage element (38) which can rotate so that it slides over the bottom (34) and is provided with dosage segments (48) of a given volume, which are only open on the top side (51) and the underside (52) of the dosage element (38), and a cover plate (60), which is arranged above the dosage element (38) at a fixed position above the bottom outlet opening (44), and a drive (36) for rotating the dosage element (38).

2. Device according to claim 1, **characterized in that** the rotatable dosage element (38) is attached to a driven rotation shaft (35), which is arranged vertically in the storage vessel (32) and passes through a shaft opening (46) in the bottom (34) of the storage vessel (32).

3. Device according to one of the preceding claims, **characterized in that** a stirring device (64) is provided in the storage vessel (32).

4. Device according to claim 3, **characterized in that** the stirring device (64) comprises a stirring shaft (66) and stirring arms (68) which are arranged perpendicular to the stirring shaft and are orientated radially.

5. Device according to claim 3 or 4, **characterized in that** the stirring device (64) comprises an introduction element (70), which is connected to a bottom stirring arm (68) and is in the form of a helix downwardly directed in a direction which is opposite to the direction of rotation of the stirring shaft.

6. Device according to one of the preceding claims 3-5, **characterized in that** the stirring shaft (66) is connected to the rotation shaft (35).

7. Device according to one of the preceding claims, **characterized in that** the device comprises means (90) for detecting and counting dosage segments (48).

8. Device according to one of the preceding claims, **characterized in that** the dosage element (38) comprises dosage segments (48) which are distributed over the entire circumference thereof, which dosage segments (48) each have the same volume.

9. Device according to one of the preceding claims, **characterized in that** the shape and dimensions of the cover plate (60) substantially correspond to the shape and dimensions of a dosage segment (48) of the dosage element (38).

10. Device according to one of the preceding claims, **characterized in that** the device comprises a control device for controlling the flow rate of the starting materials of the batter on the basis of one or more measured properties of the batter, and a system (80,82,84) for determining one or more properties of the batter.

11. Device according to one of the preceding claims, **characterized in that** the device is provided with a system (80, 82,84) for determining the viscosity of the batter.

12. Device for the in-line preparation of a flowable batter, in particular batter intended for use as coating material in the food industry, comprising a conveyor line (100) having an inlet end (102) for supplying liquid starting material of the batter and an outlet end (104) for discharging finished batter, the line (100) between the inlet end (102) and the outlet end (104) being connected to at least one dosage unit (30) for feeding particulate material to the line (100), the dosage unit comprising a storage vessel (32) for particulate material, the bottom (34) of which vessel is provided with a bottom outlet opening (44), a dosage element (38) which can rotate so as to slide over the bottom (34) and is provided with dosage segments (48) of a given volume, which are only open on the top side (51) and the underside (52) of the dosage element (38), and a cover plate (60), which is arranged above the dosage element (38) at a fixed position above the bottom outlet opening (44), and a drive (36) for rotating the dosage element (38).

13. Device according to claim 12, **characterized in that** the conveyor line (100) is provided with a mixing device (112) at least downstream of each dosage unit (30).

14. Device according to claim 12 or 13, **characterized in that** the device comprises a control device for controlling the flow rate of the dosage unit (30) for particulate material on the basis of one or more measured properties of the batter, and a system (82,84) for determining one or more properties of the batter.

15. Device according to one of claims 12-14, **characterized in that** the system for determining one or more properties of the batter is incorporated in a circulation loop (120) which is connected to the conveyor line (100).

16. Dosage unit, comprising a storage vessel (32) for particulate material, the bottom (34) of which is provided with a bottom outlet opening (44), a dosage element (38), which can rotate in such a manner that its slides over the bottom (34) and which is provided with dosage segments (48) of a given volume, which are only open on the top side (51) and the underside (52) of the dosage element (38), and a cover plate (60), which is arranged above the dosage element (38) at a fixed position above the bottom outlet opening (44), and a drive (36) for rotating the dosage element (38).

17. Dosage unit according to claim 16, **characterized in that** a stirring device (62) is provided in the storage vessel (32), which stirring device (62) comprises at least one stirring arm (68), which is provided with an introduction element (70) which is in the shape of a helix downwardly directed in a direction which is opposite to the direction of rotation of the dosage element (38).

18. Use of a device comprising a mixing vessel (10), which is provided with a mixing device (12) for mixing starting materials of batter and with an outlet (16) for finished batter, a liquid-dosage unit (26, 28), which is connected to the mixing vessel (10), for feeding liquid starting material to the mixing vessel (10), and a dosage unit (30), which is connected to the mixing vessel (10), for feeding particulate material to the mixing vessel (10), in which device the dosage unit comprises a storage vessel (32) for particulate material, the bottom (34) of which vessel is provided with a bottom outlet opening (44), a dosage element (38) which can rotate so that it slides over the bottom (34) and is provided with dosage segments (48) of a given volume, which are only open on the top side (51) and the underside (52) of the dosage element (38), and a cover plate (60), which is arranged above the dosage element (38) at a fixed position above the bottom outlet opening (44), and a drive (36) for rotating the dosage element (38), in the batchwise preparation of flowable batter, in particular batter intended for use as coating material in the food industry.

19. Use of a device comprising a conveyor line (100) having an inlet end (102) for supplying liquid starting material of the batter and an outlet end (104) for discharging finished batter, the conveyor line (100) between the inlet end (102) and the outlet end (104) being connected to at least one dosage unit (30) for feeding particulate material to the line (100), the dosage unit comprising a storage vessel (32) for particulate material, the bottom (34) of which vessel is provided with a bottom outlet opening (44), a dosage element (38) which can rotate so as to slide over the bottom (34) and is provided with dosage segments (48) of a given volume, which are only open on the top side (51) and the underside (52) of the dosage element (38), and a cover plate (60), which is arranged above the dosage element (38) at a fixed position above the bottom outlet opening (44), and a drive (36) for rotating the dosage element for the in-line preparation of a flowable batter, in particular batter (38), intended for use as coating material in the food industry.

20. Use according to claim 18 or 19 in the preparation of flowable batter having a viscosity in the range from 100-400 centipoise.

## Patentansprüche

1. Vorrichtung für die Zubereitung von fließfähigem Teig, insbesondere von Teig, der für die Verwendung als Überzugmaterial in der Lebensmittelindustrie bestimmt ist, in Chargen, mit einem Mischgefäß (10), das mit einer Mischvorrichtung (12) zum Mischen von Ausgangsmaterialien des Teigs und mit einem Auslass (16) für den fertiggestellten Teig versehen ist, einer Flüssigkeitsdosierungseinheit (26, 28), die mit dem Mischgefäß (10) verbunden ist, um dem Mischgefäß (10) flüssiges Ausgangsmaterial zuzuführen, und einer Dosierungseinheit (30), die mit dem Mischgefäß (10) verbunden ist, um dem Mischgefäß (10) Partikelmaterial zuzuführen, wobei in der Vorrichtung die Dosierungseinheit ein Speichergefäß (32) für Partikelmaterial, dessen Boden (34) mit einer Bodenauslassöffnung (44), einem Dosierungselement (38), das sich so drehen kann, dass es über den Boden (34) gleitet, und mit Dosierungssegmenten (48) eines gegebenen Volumens versehen ist, die nur zur Oberseite (51) und zur Unterseite (52) des Dosierungselements (38) offen sind, und eine Abdeckplatte (60), die über dem Dosierungselement (38) an einer festen Position über der Bodenauslassöffnung (44) angeordnet ist, versehen ist und einen Antrieb (36) zum Drehen des Dosierungselements (38) umfasst.

2. Vorrichtung nach Anspruch 1, **dadurch gekennzeichnet, dass** das drehbare Dosierungselement (38) an einer angetriebenen Drehwelle (35) befestigt ist, die in dem Speichergefäß (32) vertikal angeordnet ist und durch eine Wellenöffnung (46) im Boden (34) des Speichergefäßes (32) verläuft.

3. Vorrichtung nach einem der vorhergehenden Ansprüche, **dadurch gekennzeichnet, dass** in dem Speichergefäß (32) eine Rührvorrichtung (64) vorgesehen ist.

4. Vorrichtung nach Anspruch 3, **dadurch gekennzeichnet, dass** die Rührvorrichtung (64) eine Rührwelle (66) sowie Rührarme (68), die senkrecht zu der Rührwelle angeordnet und radial orientiert sind, umfasst.

5. Vorrichtung nach Anspruch 3 oder 4, **dadurch gekennzeichnet, dass** die Rührvorrichtung (64) ein Einleitungselement (70) umfasst, das mit einem unteren Rührarm (68) verbunden ist und die Form einer Schraubenlinie besitzt, die in einer Richtung, die zu der Drehrichtung der Rührwelle entgegengesetzt ist, nach unten gerichtet ist.

6. Vorrichtung nach einem der vorhergehenden Ansprüche 3-5, **dadurch gekennzeichnet, dass** die Rührwelle (66) mit der Drehwelle (35) verbunden ist.

7. Vorrichtung nach einem der vorhergehenden Ansprüche, **dadurch gekennzeichnet, dass** die Vorrichtung Mittel (90) zum Erfassen und Zählen der Dosierungssegmente (48) umfasst.

8. Vorrichtung nach einem der vorhergehenden Ansprüche, **dadurch gekennzeichnet, dass** das Dosierungselement (38) Dosierungssegmente (48) umfasst, die über seinen gesamten Umfang verteilt sind, wobei die Dosierungssegmente (48) jeweils das gleiche Volumen besitzen.

9. Vorrichtung nach einem der vorhergehenden Ansprüche, **dadurch gekennzeichnet, dass** die Form und die Abmessungen der Abdeckplatte (60) im Wesentlichen der Form und den Abmessungen eines Dosierungssegments (48) des Dosierungselements (38) entsprechen.

10. Vorrichtung nach einem der vorhergehenden Ansprüche, **dadurch gekennzeichnet, dass** die Vorrichtung eine Steuervorrichtung umfasst, die die Durchflussmenge der Ausgangsmaterialien des Teigs anhand einer oder mehrerer gemessenen Eigenschaften des Teigs steuert, und ein System (80, 82, 84) zum Bestimmen einer oder mehrerer Eigenschaften des Teigs umfasst.

11. Vorrichtung nach einem der vorhergehenden Ansprüche, **dadurch gekennzeichnet, dass** die Vorrichtung mit einem System (80, 82, 84) versehen ist, das die Viskosität des Teigs bestimmt.

12. Vorrichtung für die Zubereitung von fließfähigem Teig in einer Produktionsstraße, insbesondere von Teig, der für die Verwendung als Überzugmaterial in der Lebensmittelindustrie bestimmt ist, mit einer Beförderungsleitung (100), die ein Einlassende (102) zum Zuführen von flüssigem Ausgangsmaterial des Teigs und ein Auslassende (104) zum Abführen von fertiggestelltem Teig besitzt, wobei die Leitung (100) zwischen dem Einlassende (102) und dem Auslassende (104) mit wenigstens einer Dosierungseinheit (30) verbunden ist, um der Leitung (100) Partikelmaterial zuzuführen, wobei die Dosierungseinheit ein Speichergefäß (32) für Partikelmaterial, dessen Boden (34) mit einer Bodenauslassöffnung (44), einem Dosierungselement (38), das sich so drehen kann, dass es über den Boden (34) gleitet, und mit Dosierungssegmenten (48) eines gegebenen Volumens versehen ist, die nur zur Oberseite (51) und zur Unterseite (52) des Dosierungselements (38) offen sind, und einer Abdeckplatte (60), die über dem Dosierungselement (38) an einer festen Position über der Bodenauslassöffnung (44) angeordnet ist, versehen ist und einen Antrieb (36) zum Drehen des Dosierungselements (38) umfasst.

13. Vorrichtung nach Anspruch 12, **dadurch gekennzeichnet, dass** die Beförderungsleitung (100) wenigstens auf der Auslassseite jeder Dosierungseinheit (30) mit einer Mischvorrichtung (112) versehen ist.

14. Vorrichtung nach Anspruch 12 oder 13, **dadurch gekennzeichnet, dass** die Vorrichtung eine Steuervorrichtung umfasst, die die Durchflussmenge der Dosierungseinheit (30) für Partikelmaterial anhand einer oder mehrerer gemessener Eigenschaften des Teigs steuert, und ein System (82, 84), das eine oder mehrere Eigenschaften des Teigs bestimmt, umfasst.

15. Vorrichtung nach einem der Ansprüche 12-14, **dadurch gekennzeichnet, dass** das System zum Bestimmen einer oder mehrerer Eigenschaften des Teigs in eine Zirkulationsschleife (120) eingebaut ist, die mit der Beförderungsleitung (100) verbunden ist.

16. Dosierungseinheit, die ein Speichergefäß (32) für Partikelmaterial, dessen Boden (34) mit einer Bodenauslassöffnung (44), einem Dosierungselement (38), das sich so drehen kann, dass es über den Boden (34) gleitet, und mit Dosierungssegmenten (48) eines gegebenen Volumens versehen ist, die nur zur Oberseite (51) und zur Unterseite (52) des Dosierungselements (38) offen sind, und einer Abdeckplatte (60), die über dem Dosierungselement (38) an einer festen Position über der Bodenauslassöffnung (44) angeordnet ist, versehen ist und einen Antrieb (36), der das Dosierungselement (38) dreht, umfasst.

17. Dosierungseinheit nach Anspruch 16, **dadurch gekennzeichnet, dass** in dem Speichergefäß (32) eine Rührvorrichtung (62) vorgesehen ist, die wenigstens einen Rührarm (68) aufweist, der mit einem Einleitungselement (70) versehen ist, das die Form einer Schraubenlinie hat, die in einer Richtung, die zu der Drehrichtung des Dosierungselement (38) entgegengesetzt ist, nach unten gerichtet ist.

18. Verwendung einer Vorrichtung, die ein Mischgefäß (10), das mit einer Mischvorrichtung (12) zum Mischen von Ausgangsmaterialien von Teig und mit einem Auslass (16) für fertiggestellten Teig versehen ist, eine Flüssigkeitsdosierungseinheit (26, 28), die mit dem Mischgefäß (10) verbunden ist, um dem Mischgefäß (10) flüssiges Ausgangsmaterial zuzuführen, und eine Dosierungseinheit (30), die mit dem Mischgefäß (10) verbunden ist, um dem Mischgefäß (10) Partikelmaterial zuzuführen, umfasst, wobei in der Vorrichtung die Dosierungseinheit ein Speichergefäß (32) für Partikelmaterial, dessen Boden (34) mit einer Bodenauslassöffnung (44), einem Dosierungselement (38), das sich so drehen kann, dass es über den Boden (34) gleitet, und mit Dosierungssegmenten (48) eines gegebenen Volumens versehen ist, die nur zur Oberseite (51) und zur Unterseite (52) des Dosierungselements (38) offen sind, und eine Abdeckplatte (60), die über dem Dosierungselement (38) an einer festen Position über der Bodenauslassöffnung (44) angeordnet ist, versehen ist und einen Antrieb (36), der das Dosierungselement (38) dreht, umfasst, bei der chargenweisen Zubereitung von fließfähigem Teig, insbesondere von Teig, der für die Verwendung als Überzugmaterial in der Lebensmittelindustrie bestimmt ist.

19. Verwendung einer Vorrichtung, die eine Beförderungsleitung (100) mit einem Einlassende (102) zum Zuführen von flüssigem Ausgangsmaterial des Teigs und mit einem Auslassende (104) zum Abführen des fertiggestellten Teigs umfasst, wobei die Beförderungsleitung (100) zwischen dem Einlassende (102) und dem Auslassende (104) mit wenigstens einer Dosierungseinheit (30) verbunden ist, die dem Band (100) Partikelmaterial zuführt, wobei die Dosierungseinheit ein Speichergefäß (32) für Partikelmaterial, dessen Boden (34) mit einer Bodenauslassöffnung (44), einem Dosierungselement (38), das sich so drehen kann, dass es über den Boden (34) gleitet, und mit Dosierungssegmenten (48) eines gegebenen Volumens versehen ist, die nur zur Oberseite (51) und zur Unterseite (52) des Dosierungselements (38) offen sind, und einer Abdeckplatte (60), die über dem Dosierungselement (38) an einer festen Position über der Bodenauslassöffnung (44) angeordnet ist, versehen ist und einen Antrieb (36), der das Dosierungselement dreht, umfasst, für die Zubereitung von fließfähigem Teig, insbesondere von Teig (38), der für die Verwendung als Überzugmaterial in der Lebensmittelindustrie bestimmt ist, auf einem Fließband.

20. Verwendung nach Anspruch 18 oder 19 für die Zubereitung von fließfähigem Teig, der eine Viskosität im Bereich von 100-400 Centipoise besitzt.

## Revendications

1. Dispositif destiné à préparer une pâte liquide, en particulier une pâte destinée à être utilisée en tant que produit d'enrobage dans l'industrie alimentaire, en discontinu, comprenant une cuve de mélange (10), qui est pourvue d'un mélangeur (12) destiné à mélanger les produits de départ de la pâte et d'un orifice de sortie (16) pour la pâte finie, une unité de dosage de liquide (26, 28), qui est reliée à la cuve de mélange (10), destinée à alimenter la cuve de mélange (10) en produit de départ liquide et une unité de dosage (30) qui est reliée à la cuve de mélange (10), destinée à alimenter la cuve de mélange (10) en produits particulaires, dans lequel dispositif, l'unité de dosage comprend une cuve de stockage (32) pour produit particulaire, dont le fond (34) est pourvu d'un orifice d'écoulement inférieur (44), un élément de dosage (38) qui peut tourner de manière à coulisser sur le fond (34) et est pourvu de segments de dosage (48) d'un volume donné, qui sont uniquement ouverts sur le côté supérieur (51) et la sous-face (52) de l'élément de dosage (38) et une plaque de recouvrement (60) qui est disposée au-dessus de l'élément de dosage (38) à une position fixe au-dessus de l'orifice d'écoulement inférieur (44) et un entraînement (36) destiné à faire tourner l'élément de dosage (38).

2. Dispositif selon la revendication 1, **caractérisé en ce que** l'élément de dosage pouvant tourner (38) est fixé à un arbre de rotation entraîné (35) qui est disposé verticalement dans la cuve de stockage (32) et passe à travers une ouverture d'arbre (46) dans le fond (34) de la cuve de stockage (32).

3. Dispositif selon l'une des revendications précédentes, **caractérisé en ce qu'**un agitateur (64) est prévu dans la cuve de stockage (32).

4. Dispositif selon la revendication 3, **caractérisé en ce que** l'agitateur (64) comprend un arbre d'agitateur (66) et des bras d'agitateur (68) qui sont disposés perpendiculaires à l'arbre d'agitateur et sont orientés radialement.

5. Dispositif selon la revendication 3 ou 4, **caractérisé en ce que** l'agitateur (64) comprend un élément d'introduction (70), qui est relié à un bras d'agitateur inférieur (68) et est sous la forme d'une hélice dirigée vers le bas dans une direction qui est opposée à la direction de rotation de l'arbre d'agitateur.

6. Dispositif selon l'une des revendications précédentes 3 à 5, **caractérisé en ce que** l'arbre d'agitateur (66) est relié à l'arbre de rotation (35).

7. Dispositif selon l'une quelconque des revendications précédentes, **caractérisé en ce que** le dispositif comprend des moyens (90) destinés à détecter et compter les segments de dosage (48).

8. Dispositif selon l'une quelconque des revendications précédentes, **caractérisé en ce que** l'élément de dosage (38) comprend des segments de dosage (48) qui sont répartis sur la totalité de la circonférence de celui-ci, lesquels segments de dosage (48) ont chacun le même volume.

9. Dispositif selon l'une quelconque des revendications précédentes, **caractérisé en ce que** la forme et les dimensions de la plaque de recouvrement (60) correspondent sensiblement à la forme et aux dimensions d'un segment de dosage (48) de l'élément de dosage (38).

10. Dispositif selon l'une quelconque des revendications précédentes, **caractérisé en ce que** le dispositif comprend un dispositif de commande destiné à commander le débit des produits de départ de la pâte sur la base d'une ou plusieurs propriétés mesurées de la pâte et un système (80, 82, 84) destiné à déterminer une ou plusieurs propriétés de la pâte.

11. Dispositif selon l'une quelconque des revendications précédentes, **caractérisé en ce que** le dispositif est pourvu d'un système (80, 82, 84) destiné à déterminer la viscosité de la pâte.

12. Dispositif pour la préparation en ligne d'une pâte liquide, en particulier une pâte destinée à être utilisée en tant que produit d'enrobage dans l'industrie alimentaire, comprenant une ligne de transporteur (100) ayant une extrémité d'entrée (102) destinée à alimenter le produit de départ liquide de la pâte et une extrémité de sortie (104) destinée à évacuer la pâte finie, la ligne (100) entre l'extrémité d'entrée (102) et l'extrémité de sortie (104) étant reliée à au moins une unité de dosage (30) destinée à alimenter la ligne (100) en produits particulaires, l'unité de dosage comprenant une cuve de stockage (32) pour produit particulaire, dont le fond (34) est pourvu d'un orifice d'écoulement inférieur (44), un élément de dosage (38) qui peut tourner de manière à coulisser sur le fond (34) et est pourvu de segments de dosage (48) d'un volume donné, qui sont uniquement ouverts sur le côté supérieur (51) et la sous-face (52) de l'élément de dosage (38) et une plaque de recouvrement (60) qui est disposée au-dessus de l'élément de dosage (38) à une position fixe au-dessus de l'orifice d'écoulement inférieur (44) et un entraînement (36) destiné à faire tourner l'élément de dosage (38).

13. Dispositif selon la revendication 12, **caractérisé en ce que** la ligne de transporteur (100) est pourvue d'un mélangeur (112) au moins en aval de chaque unité de dosage (30).

14. Dispositif selon la revendication 12 ou 13, **caractérisé en ce que** le dispositif comprend un dispositif de commande destiné à commander le débit de l'unité de dosage (30) pour le produit particulaire sur la base d'une ou plusieurs propriétés mesurées de la pâte et un système (82, 84) destiné à déterminer une ou plusieurs propriétés de la pâte.

15. Dispositif selon la revendication 12 à 14, **caractérisé en ce que** le système destiné à déterminer une ou plusieurs propriétés de la pâte est incorporé dans une boucle de circulation (120) qui est reliée à la ligne de transporteur (100).

16. Unité de dosage, comprenant une cuve de stockage (32) pour produit particulaire, dont le fond (34) est pourvu d'un orifice d'écoulement inférieur (44), un élément de dosage (38) qui peut tourner de manière telle qu'il coulisse sur le fond (34) et qui est pourvu de segments de dosage (48) d'un volume donné, qui sont uniquement ouverts sur le côté supérieur (51) et la sous-face (52) de l'élément de dosage (38) et une plaque de recouvrement (60) qui est disposée au-dessus de l'élément de dosage (38) à une position fixe au-dessus de l'orifice d'écoulement inférieur (44) et un entraînement (36) destiné à faire tourner l'élément de dosage (38).

17. Unité de dosage selon la revendication 16, **caractérisée en ce qu'**un agitateur (62) est fourni dans la cuve de stockage (32), lequel agitateur (62) comprend au moins un bras d'agitateur (68), qui est pourvu d'un élément d'introduction (70) qui est sous la forme d'une hélice dirigée vers le bas dans une direction qui est opposée à la direction de rotation de l'élément de dosage (38).

18. Utilisation d'un dispositif comprenant une cuve de mélange (10), qui est pourvue d'un mélangeur (12) destiné à mélanger des produits de départ de la pâte et avec un orifice de sortie (16) pour la pâte finie, une unité de dosage de liquide (26, 28), qui est reliée à la cuve de mélange (10), destinée à alimenter la cuve de mélange (10) en produit de départ liquide et une unité de dosage (30) qui est reliée à la cuve de mélange (10), destinée à alimenter la cuve de mélange (10) en produits particulaires, dans lequel dispositif l'unité de dosage comprend une cuve de stockage (32) pour produit particulaire, dont le fond (34) est pourvu d'un orifice d'écoulement inférieur (44), un élément de dosage (38) qui peut tourner de manière à coulisser sur le fond (34) et est pourvu de segments de dosage (48) d'un volume donné, qui sont uniquement ouverts sur le côté supérieur (51) et la sous-face (52) de l'élément de dosage (38) et une plaque de recouvrement (60) qui est disposée au-dessus de l'élément de dosage (38) à une position fixe au-dessus de l'orifice d'écoulement inférieur (44) et un entraînement (36) destiné à faire tourner l'élément de dosage (38), dans la préparation en discontinu d'une pâte liquide, en particulier une pâte destinée à être utilisée en tant que produit d'enrobage dans l'industrie alimentaire.

19. Utilisation d'un dispositif comprenant une ligne de transporteur (100) ayant une extrémité d'entrée (102) destinée à alimenter le produit de départ liquide de la pâte et une extrémité de sortie (104) destinée à évacuer la pâte finie, la ligne de transporteur (100) entre l'extrémité d'entrée (102) et l'extrémité de sortie (104) étant reliée à au moins une unité de dosage (30) destinée à alimenter la ligne (100) en produits particulaires, l'unité de dosage comprenant une cuve de stockage (32) pour produit particulaire, dont le fond (34) est pourvu d'un orifice d'écoulement inférieur (44), un élément de dosage (38) qui peut tourner de manière à coulisser sur le fond (34) et est pourvu de segments de dosage (48) d'un volume donné, qui sont uniquement ouverts sur le côté supérieur (51) et la sous-face (52) de l'élément de dosage (38) et une plaque de recouvrement (60) qui est disposée au-dessus de l'élément de dosage (38) à une position fixe au-dessus de l'orifice d'écoulement inférieur (44) et un entraînement (36) destiné à faire tourner l'élément de dosage pour la préparation en ligne d'une pâte liquide, en particulier une pâte (38), destinée à être utilisée en tant que produit d'enrobage dans l'industrie alimentaire.

20. Utilisation selon la revendication 18 ou 19 dans la préparation d'une pâte liquide présentant une viscosité dans la gamme entre 100 et 400 centipoises.
